# EUROPEAN PATENT APPLICATION

(11) **EP 4 220 469 A1**
(43) Date of publication of application: **02.08.2023**
(21) Application number: 23305128.3
(22) Date of filing: 01.02.2023
(51) Int. Cl.: G06F 21/64, G07B 17/00

(54) **POSTAL SECURITY DEVICE WITH HARDWARE SECURITY MODULES**

(30) Priority: 01.02.2022 US 202217590324
(71) Applicant: Quadient Technologies France, 92220 Bagneux (FR)
(72) Inventor: SRIDHARAN, Sidhartha, 92220 BAGNEUX (FR); KRESINA, Roman, 92220 BAGNEUX (FR)
(74) Representative: Cabinet Beau de Loménie

(57) **Abstract**

Postage generation and management systems are provided in which hardware security modules (HSMs) are used to perform cryptographic operations instead of conventional postal security devices. Virtual PSD data is stored in a database (130) and processed by the HSMs, allowing for improved security and scalability.

## Description

### TECHINCAL FIELD

The present disclosure relates to postal security devices, such as used in conjunction with franking machines and other devices that are used to generate postal indicia and other similar value-bearing items.

### BACKGROUND

Typical postage evidencing systems use a postal security device (PSD), which is a dedicated secure computing device and/or environment. The PSD performs financial accounting of postage funds, as well as any cryptographic operations required to sign the postal indicia. Conventional PSDs commonly maintain registers to track the amount of funds available to generate postage; log activity of the PSD; sign indicia generated by the device; manage cryptographic keys used to sign register values and indicia; and monitor the device for tampering. Typically each physical mailing machine has an embedded or associated PSD. Some systems, such as Internet postage systems, incorporate a remote PSD which is able to provide PSD-type services to multiple clients, which may have been previously described in the art as a "virtual PSD" because the device is not resident at the same location where postage is requested. For example, some Internet-based postage systems use a fixed number of physical PSDs that may be virtualized in a remote server and shared across multiple customers, with the service provider managing accounts between the customers and the PSDs. Such devices typically have a limit on the number of clients they can host due to storage and bandwidth limitations.

### SUMMARY

Methods, systems, and computer-readable media are disclosed for providing a postage indicia, by receiving a request to generate an indicia; obtaining a VPSD record from a VPSD database which stores records for multiple VPSDs; extracting register information from the VPSD record; updating register values in the VPSD record based on the request; processing, via a HSM, the VPSD record and the first request to generate the indicia, by cryptographically signing a generated indicia that includes a fund amount corresponding to updates made to the register values; storing the updated register values in the VPSD record in the VPSD database; and providing the generated indicia.

### BRIEF DESCRIPTION OF THE DRAWINGS

FIG. 1 shows data flows between components of a system using HSM-based VPSD devices as disclosed herein.
FIG. 2 shows data flows between components of a system using cloud HSM-based VPSD devices as disclosed herein.
FIGS. 3A and 3B show a process for generating indicia using HSMs according to embodiments disclosed herein.
FIG. 4A shows an example of HSM key relationships according to embodiments disclosed herein;
FIG. 4B shows an example key hierarchy according to embodiments disclosed herein.
FIG. 5 shows an example process to initialize an HSM according to embodiments disclosed herein.
FIG. 6A shows an example process to generate a master key according to embodiments disclosed herein
FIG. 6B shows a corresponding example of restoring a master key from the encrypted key shares generated in FIG. 6A.
FIG. 7 shows an example of importing and exporting master keys between HSMs according to embodiments disclosed herein.
FIG. 8 shows an architecture diagram for an example cloud-based system as disclosed herein.
FIG. 9 shows a schematic representation of a computer system suitable for implementing the systems and techniques disclosed herein.

### DETAILED DESCRIPTION

Conventional PSDs provide the secure functionality, such as tracking available funds and related operations, that are necessary for franking machines and other postage systems to operate effectively. The PSD typically is physically integrated with the device that provides postage or franking services. Some systems use a "virtual PSD," which usually refers to a remote device which may include a conventional PSD or equivalent. The functionality of the PSD is provided via a network interface such as over the Internet to end users. In some cases the remote PSDs are associated with and/or owned by individual customers. In other arrangements, a service provider may own the PSDs and be responsible for managing funds within them. The service provider may then provide postage to its own end users based on operations performed on its own PSDs, without the end users needing to have an account with the PSD. Conventional PSDs and prior "virtual PSDs" often suffer from scalability issues. For conventional PSDs, the only way to add additional throughput is to use additional PSDs or devices containing them. Similarly, virtual PSD systems are limited by the throughput of the backend PSDs used by the intervening service provider. Conventional and prior so-called "virtual" PSDs also suffer from significant recovery issues in the event of a physical hardware failure, since the PSD stores all register values internally. If a PSD fails, it can be difficult and time consuming to recover the last known-good register values, which store the postage value stored in the PSD, from the failed device.

Embodiments disclosed herein provide virtual PSDs based on hardware security modules (HSMs) that provide improved security, efficiency, and scalability. As used herein, a "hardware security module" refers to a device as is known in the cryptographic art, which provides management of digital cryptographic keys, cryptographic signing functions, and the like. Typically, an HSM is a limited-purpose Secure Computing Platform device that performs only those functions that are defined in executable code stored in the HSM. HSMs typically include a dedicated hardware cryptographic processor. An example of a suitable hardware HSM for use with embodiments disclosed herein is the IBM 4767, which is a Federal Information Processing Standard (FIPS) 140-2 Level 4 Certified HSM. It may be preferred to use HSMs that meet at least the FIPS 140-2 standard, and operations performed by, and only accessible by, such devices may be referred to as being performed within a "FIPS boundary," i.e., within a cryptographically-secure computing environment.

In general, embodiments disclosed herein use HSMs and HSM-based systems to provide "virtual PSDs" (VPSDs), i.e., remote systems that are configured to provide the functions conventionally provided by the PSDs resident in franking machines and the like. Virtual PSDs as used herein may differ from other prior "virtual" devices, such as those used for Internet-based postage systems, in that they effectively and efficiently separate the secure functions, such as updating of registers, signing indicia, and the like, from other operations, and allow for greater scalability. A VPSD in this context and as used herein is represented by a database record that stores register values and other identifying information for the VPSD, but unlike conventional systems or prior "virtual" systems, there is no need for each stored VPSD record to be associated on a one-to-one basis with the HSM that provides the secure functions for the system, or for the VPSD to be permanently embodied in a specific hardware device. That is, each HSM may handle secure operations for any number of virtual PSDs by processing requests based on the VPSD record stored in the database, and each VPSD may be considered the combination of the stored VPSD record and whichever HSM device is used temporarily to process the VPSD record at the time that the VPSD is used to generate a postage indicia. Notably, due to this split data/secure operation structure, embodiments disclosed herein can also support an unlimited number of VPSDs without suffering from any of the scaling issues associated with conventional PSD-based systems or prior virtual PSD systems such as Internet postage systems. Embodiments disclosed herein also provide more robust protection from hardware failure; if an HSM device fails, the register values for the virtual PSD are still available within a VPSD database as disclosed herein, making access and recovery of those values possible through a database query. In contrast, prior devices and systems would need to recover the register values from a failed PSD itself, which may be difficult, expensive, and/or time-consuming depending on the state of the failed PSD. In conventional systems, a failed PSD also may require temporarily shutting down any associated systems that relied on the PSD to generate postal indicia. In contrast, a failure of one or even many HSMs does not require any stoppage of associated systems as disclosed herein, since the failed HSM(s) can be replaced at the same time that other fully-functional HSMs are used to perform any of the secure operations disclosed herein.

From the standpoint of the USPS, each VPSD disclosed herein is inactive while stored in the database. It becomes active when its associated data is loaded into an HSM and an operation performed.

Embodiments disclosed herein also may use a database to store information, potentially in clear text, for a PSD, along with encrypted data including cryptographic keys both to (1) secure the clear text data from being modified, and (2) sign postal indicia generated by the system.

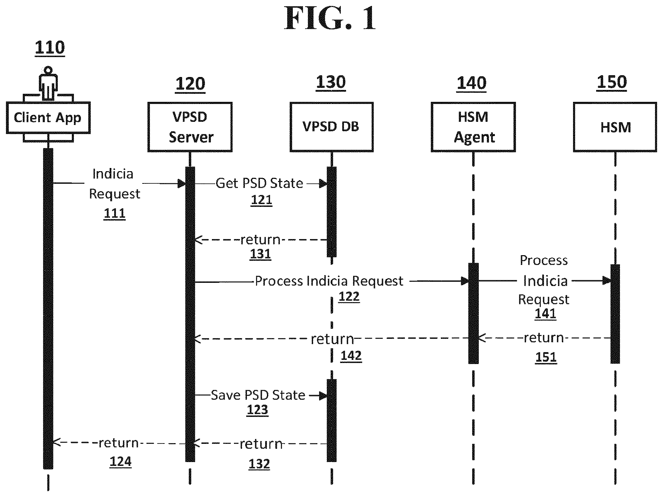

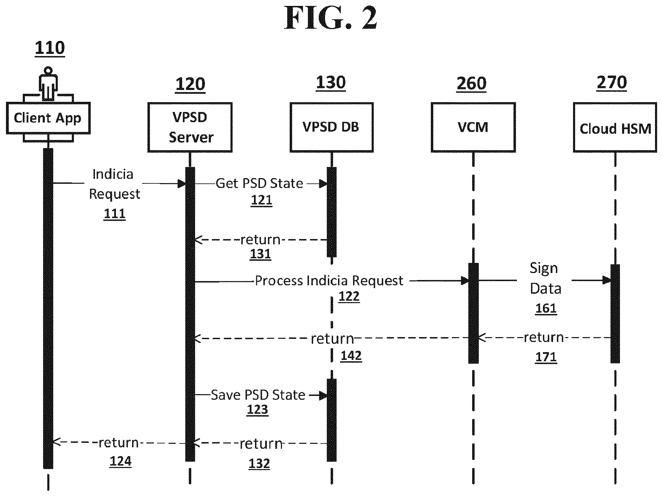

FIGS. 1 and 2 show example systems and data exchange flows according to embodiments disclosed herein. In FIG. 1, "on premise," or physical hardware, HSM devices are used. Such devices typically are resident at the location where the postal indicia are to be generated. In FIG. 2, cloud-based HSMs are used instead of local hardware devices.

Both arrangements include a client app 110, which is any client application that may submit requests to generate postal indicia. The request may be made, for example, through an HTTP REST call, though more generally any suitable communication may be used.

The VPSD server 120 orchestrates calls for PSD-type functions across different components within the system. Any PSD operation may be performed, such as loading funds, creating indicia, re-keying a PSD signature key, and the like, including any function performed by a conventional PSD. As disclosed in further detail below, the VPSD server 120 may obtain and save PSD state data in a VPSD database 130. Data in each VPSD record may be encrypted and/or cryptographically signed to allow for verification of the data when used by an HSM, as disclosed herein. In some cases, it may be preferred for the data to be stored in cleartext but cryptographically signed to allow for verification; in such an arrangement it is simple to obtain the register values for an individual VPSD from the VPSD database 130, but the cryptographic signature ensures that the values cannot be easily changed. The VPSD server 120 also invokes the HSM agent 140 or the virtual cryptography module (VCM) 260 to process PSD operations. The VPSD server 120 is also responsible for invoking a reset via a service provider (not shown), for example if an associated client does not have sufficient funds available to generate the requested indicia.

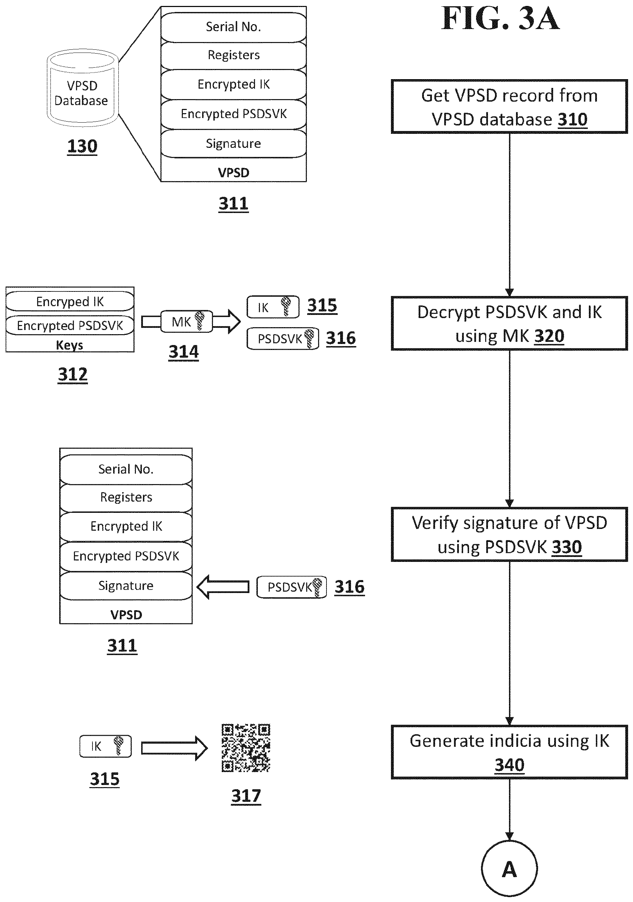

The VPSD database 120 stores the state of VPSD devices for persistence, allowing for a chain of cryptographically-verified state changes for any PSD. Some data in the VPSD database 120 may be stored in plain text, though it is preferred that all cryptographic keys used to create indicia and update VPSD state may be stored in the VPSD database 120 in an encrypted state, for example in a security package as described with respect to FIG. 3A and/or any generated indicia, for example to provide for verification, refund/reprint, or similar functions. Accordingly, even though some data may be stored in the VPSD database 120 in plain text, a security breach or leak of the database does not pose a risk to the system as a whole since the critical items in the database (the keys) are encrypted and/or cryptographically signed.

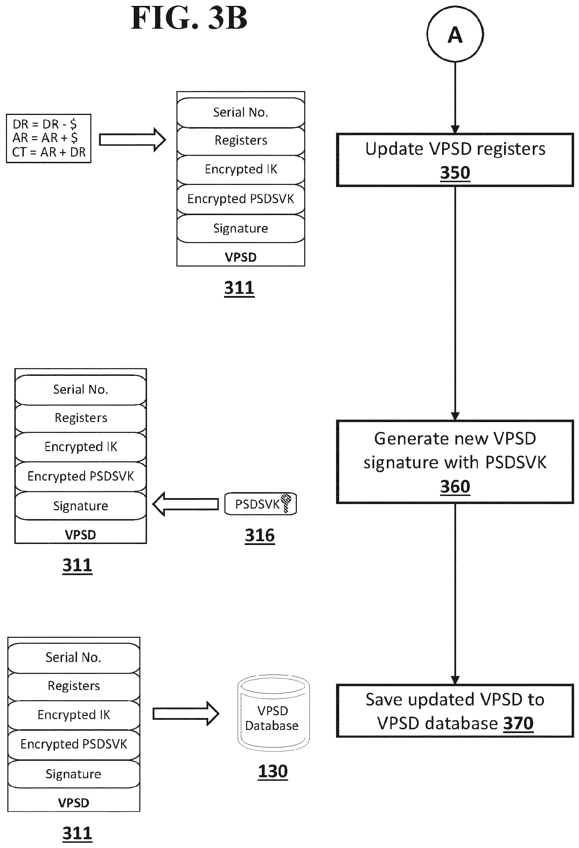

In an on-premise system, or a similar system that uses HSM agent 150 manages requests to HSM devices 150. For example, the HSM agent 150 may queue any requests for cryptographic functions and forward them serially to the HSM. The HSM agent 150 also may monitor the availability and health of HSM devices 150 and report when they are not available. In an arrangement as shown in FIG. 1, all PSD business operations are performed at the HSM 150, i.e., within the FIPS boundary, as well as all cryptographic operations needed to support the PSD operations. A master key that is used by the system to encrypt all PSD-related keys for storage also may be stored within the FIPS boundary, i.e., by the HSM 150. When a VPSD is needed to perform an operation, the data related to the VPSD is loaded into the HSM 150 along with other parameters needed for the specific operation. Custom firmware within the HSM 150 then is executed to authenticate and/or decrypt the data (including the keys) which was obtained from the VPSD database 130. For example the HSM 150 may decrypt various encryption keys as described in further detail with respect to FIG. 3. As another example, the HSM 150 may verify a cryptographic signature of the VPSD register values stored in the VPSD record (which may be in cleartext) to confirm that the values have not been modified. The HSM 150 carries out the business/accounting operations associated with the operation, updates the VPSD data, resigns the VPSD data, and returns a reply data including the re-signed VPSD data so that the data for the VPSD is updated within the VPSD database 130.

It may be preferred to use a master key (MK) to secure the VPSDs. Generally each HSM 150 has the same firmware but different public/private key pairs that uniquely identify the physical HSM device. That is, each HSM 150 is not an identical clone, the physical devices have cryptographically unique identities. The MK provides a common denominator that allows any of the physical HSMs 150 to decrypt the information coming from the VPSD database 130. The VPSD data is loaded into the HSM 150, which then uses the MK to access the VPSD state data.

Notably, because the HSM 150 does not permanently store individual PSD data, the HSM 150 can perform operations for any number of VPSDs. The VPSD data simply needs to be loaded into the HSM 150, such as from the VPSD database 130 as disclosed herein, for the VPSD operations to be performed. In some embodiments, the HSM 150 may have multiple simultaneous VPSDs handled concurrently. Alternatively or in addition, the HSM 150 may have redundant hardware elements and a multi-threaded kernel that allow the HSM to manage several parallel VPSD operations. Such a configuration may be useful for an on-premise / non-cloud-based arrangement as disclosed herein.

The arrangement shown in FIG. 2 uses a somewhat different set of operations to interact with the cloud-based HSM 270. The VPSD database 130 does not store cryptographic keys as in the arrangement of FIG. 1; rather, key identifiers of the keys used for indicia generation and PSD state signing are stored in the database 130. Generated indicia may still be stored in the VPSD database 130. Instead of an HSM agent 140, a virtual cryptography module (VCM) 260 is used to interact with the cloud HSM 270. The VCM 260 may not be executed on a secure hardware platform, i.e., it may not be executing within a FIPS boundary. VPSD business operations are performed by the VCM 260, but the VCM 260 sends any cryptographic operations to the cloud HSM 270 for execution.

The cloud HSM 270 typically will be accessed as a service provided by a cloud infrastructure, for example Microsoft Azure, Amazon Web Services, or the like. The cloud software may use the physical HSMs which are hosted in a service provider's distributed data centers which may, for example, be the HSMs 150 shown in FIG. 1. This arrangement provides scalability in the same sense as the arrangement of FIG. 1, as well as additional disaster-proofing capabilities through the use of the cloud interface. However, all HSMs within the distributed system should be capable of encrypting and decrypting the VPSD data that comes from the VPSD database 130 and the associated master encryption key (MK) as previously disclosed should be re-keyed on a periodic basis and done in real time. As such, the arrangement may benefit from a sequential generation and activation of new MKs, as disclosed in further detail herein.

Referring again to FIGS. 1 and 2, a process for performing a PSD operation using a virtual PSD as disclosed herein begins when a client application 110 sends an indicia request 111 to the VPSD server 120. The VPSD server 120 obtains state information for a VPSD associated with a user making the request through the client application 110 from the VPSD 130 via a standard database request and response 121/131. For example, the VPSD for which state information is obtained may store data associated with a particular customer that owns the client application 110 or who otherwise submitted an indicia generation request through a client application 110 including information identifying the customer that is sufficient to select the appropriate VPSD from the database 130.

At 122, the VPSD server 120 sends a request to the HSM agent 140 (FIG. 1) or the VCM 260 (FIG. 2) to process an indicia as requested via the client application 110. The request includes the VPSD state data obtained from the VPSD database 130 at 131. As previously disclosed, the state data may be stored in plain text within the database 130, but signed with a cryptographic key so that it can be verified as correct and unchanged by the HSM 150/270. In the arrangement of FIG. 1, the request and VPSD state data are passed to the HSM 150 for processing at 141. The particular physical HSM device used to process the request may be selected based on current and available load of HSM devices in the system. For example, the HSM agent 140, VCM 260, or another component in the system may track requests sent to and/or completed by individual HSM devices, and may use the tracking data to identify a suitable HSM 150/270 for the new request.

After receiving the request at 141, the HSM 150 verifies VPSD state data that was previously obtained from the VPSD database 130, for example by verifying a cryptographic signature of the VPSD state data as disclosed herein. In a system as shown in FIG. 1, the HSM 150 may use a master key as disclosed herein, which may be stored in each HSM device, to verify the state data. In a cloud-based system as shown in FIG. 2, the VCM 260 may request a public key associated with the VPSD record being processed from a cloud HSM. The public key then may be compared to a public key in the VPSD data structure, after which the cryptographic verification is performed. The HSM 150 then performs all needed functions to process the request, including increasing/decreasing register values of the VPSD, adding funds, and the like, and signs the results for later storage in the VPSD database 130, and generates the requested indicia. In the arrangement of FIG. 2, business operations such as increasing/decreasing register values of the VPSD, updating VPSD state with new register values, and the like, are performed by the VCM 260. The resulting data is then passed to the cloud HSM 270 for the indicia to be generated and for the VPSD state data to be updated and signed at 161. The cloud HSM 270 returns the indicia and the signed state data at 170.

At 142, the HSM agent 140 (FIG. 1) or the VCM 260 (FIG. 2) returns the signed data to the VPSD server 120. At 123, the VPSD server 120 stores the new signed VPSD state data and the generated indicia in the VPSD database 130, which confirms the data was stored at 132.

At 124, the requested indicia is returned to the client application 110.

In some embodiments, the VCM 260 may provide an interface to a cloud-based management system that interfaces with HSMs 150 as in FIG. 1. That is, the cloud HSMs 270 may correspond to HSMs 150 which operate as disclosed with respect to FIG. 1, with the VCM 260 providing a cloud-based interface to the distributed HSM devices 150/270. Alternatively, the HSMs 270 may be controlled and managed by the cloud service directly instead of, for example, a postal services provider that manages distributed HSMs 150.

It will be apparent from the above description that more than one cryptographic key may be used in systems disclosed herein. For example, it may be preferred to use a different key to generate indicia by the HSMs than is used to sign and verify the VPSD state information stored in the VPSD database. Furthermore, although not described in detail for purposes of clarity, it may be desirable to also sign various messages used in the system, such as those sent to the HSMs. As previously disclosed, each HSM also may have a unique cryptographic identity, suggesting that it may be desirable for each HSM to use its own key to sign data and messages generated by that HSM. As non-limiting examples, the following keys may be used:

| **Key name** | **Use** |
|---|---|
| Master Key (MK) | Encrypt PSDSVK, IK |
| Root Key (RK) | Sign messages to HSM, signature certificates |
| HSM Identity Key (HIK) | Encrypt MK in transit, sign messages to/from associated HSM |
| PSD State Verification Key (PSDSVK) | Sign and Verify PSD state obtained from VPSD database |
| Indicia Key (IK) | Sign indicia |

Each key may be "re-keyed", i.e., a new key of that type may be generated, on a periodic or recurring schedule, for example, 1, 2, 5, 10 years, or any intervening or desired period. Keys may be generated, for example, AES 256, ECC 521 (ESDSA and/or ECCDH), PBKDF2, or any other desired algorithm.

FIGS. 3A and 3B show a process for generating indicia using HSMs according to embodiments disclosed herein. The process may be performed, for example, in response to a request for indicia such as a request generated through a client application 110 resulting in the indicia request 111 as previously disclosed with respect to FIGS. 1-2. At 310, an appropriate VPSD record 311 is obtained from the VPSD database 130, for example as previously disclosed at 121/131 in FIGS. 1-2. The VPSD record may include a serial number for the VPSD, register values, encrypted keys such as the indicia key (IK) and/or PSD state verification key (PSD SVK) as previously disclosed, and a signature for the VPSD record 311 that can be used to verify that the contents of the VPSD record 311 have not been modified other than as allowed by the system, as disclosed in further detail herein.

At 320, the encrypted PSDSVK and IK keys 312 may be decrypted using a master key 314, to obtain the corresponding keys 315, 316. In some embodiments, the PSDSVK and IK keys may be stored in a "security package" 312, which is encrypted by the master key 314. Alternatively, the keys may be encrypted and stored separately in the VPSD database 130.

Notably, the master key 314 may be used across the system, thereby allowing any HSM device to perform the VPSD functions as disclosed herein for any VPSD record stored in the VPSD database. That is, unlike conventional systems where a specific hardware device is associated with a specific user or user account, in embodiments disclosed herein, only the VPSD record is associated with a specific user. The HSM hardware devices are user-agnostic and any HSM hardware device can be used to process a request associated with any VPSD record, thereby providing greatly improved scalability and reliability. At 330, VPSD record 311 may then be verified using the PSD SVK 316 and the signature included in the VPSD record 311. An indicia 317 may be generated using the indicia key 315 at 340.

At 350, the VPSD registered may be updated, similar to the process used with conventional PSDs. Typically the VPSD will include an ascending register (AR), a descending register (DR), and a control total (CT) used as a checksum for the AR and DR values. The ascending register continuously increases by the value of each indicia created. The descending register only increments on a reset operation, i.e., when more value is added to the VPSD by the owner; otherwise it continuously decreases in decrements of the value of each indicia generated. The control total typically is the sum of the ascending and descending registers and is used as a check of those registers to make sure the stored values have not been corrupted. The register operations at 350 may be performed directly by an on-premise HSM or by a cloud-based HSM system as previously disclosed.

At 360, a new signature for the updated VPSD record 311 is generated using the VPSDK 316, which is then stored in the VPSD database 130 at 370.

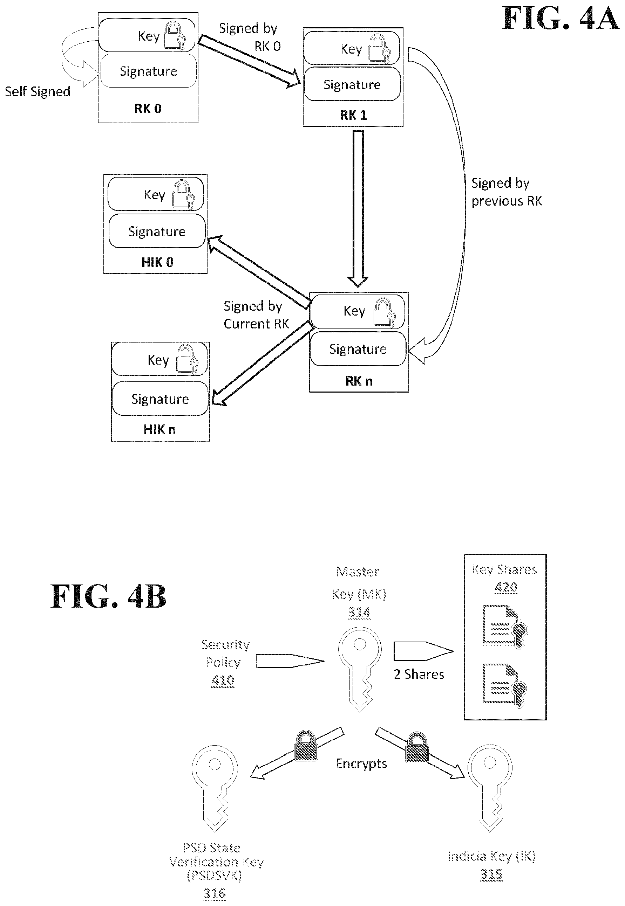

FIG. 4A shows an example of HSM key relationships according to embodiments disclosed herein. An initial root key (RK 0) may use a private key to self-sign its own certificate. After that, when the root key is re-keyed, the new root key (RK 1, RK 2, ... RK n) may be signed by the prior root key, thereby providing a cryptographically-secure traceable chain back to the original root key RK 0. Each HSM identifier key (HIK 0, HIK 1, ... HIK n) is then signed by the current root key.

Notably, conventional HSMs typically store only a root key and self-signed certificate (or equivalent keys to the root key as disclosed herein). In contrast, embodiments disclosed herein may store the master key, HSM identifier key, HSM IK certificate, and the root key certificate.

FIG. 4B shows an example key hierarchy according to embodiments disclosed herein. A master key 314 as previously disclosed may be generated based on a security policy 410 of the system. The security policy 410 may, for example, set security requirements such as key length, encryption strength or algorithm type, or the like, which may be based on USPS or similar regulatory requirements. The master key may be used to encrypt other keys used in the system, such as the IK 315, the PSDSVK 316, or any other keys or communications as previously disclosed. For long-term storage and increased security, the master key 314 may be split into two or more shares 420 as disclosed in further detail herein. Notably, neither of the key shares 420 alone is sufficient to recreate the master key 314. Unlike key shards which are used in some distributed cryptographic systems, the master key 314 cannot be recovered or recreated using an "M of N" type system in which fewer than all of the shards are sufficient to recreate the key. Rather, all key shares 420 are necessary to recreate or recover the master key 314 as used herein.

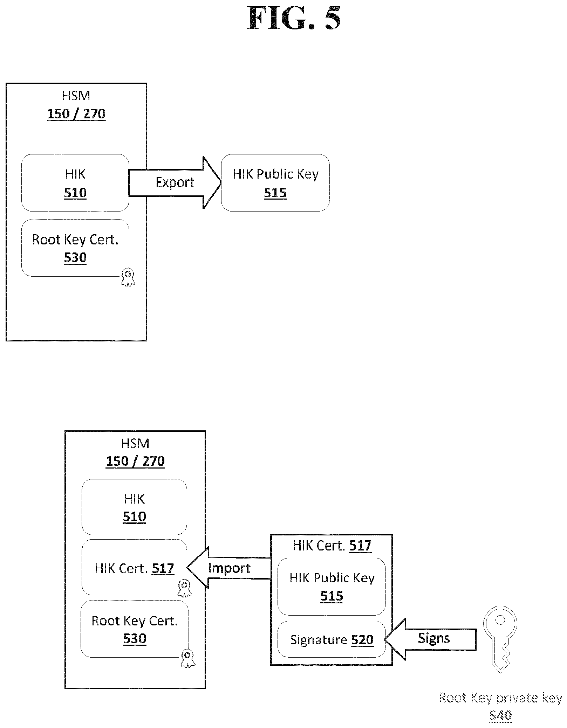

FIG. 5 shows an example process to initialize an HSM, whether used on-premise or via a cloud-based system, according to embodiments disclosed herein. A pre-compiled NRK(0) is used to securely update the NRK chain. The HSM 150/270 as previously disclosed generates an HSM identification key (HIK) pair 510 and exports the public key 515 as a self-signed certificate request. A root key 540 is used to sign the HIK certificate 517, and the signed HIK certificate 517, including the HIK public key 515 and the signature 520 is returned to the HSM 150/270. The HSM verifies the certificate 517 using the root key public key 540, and the HIK public and private keys 510, HIK certificate 517, and root key certificate 530 are stored in the HSM memory. For example, the root key certificate may be used to validate messages from the HSM agent and/or VCM as previously disclosed and/or to validate root key signatures performed on the HSM agent or VCM host. As a specific example, the HIK may be signed by the RK private key resident on the host, so the root key public key may be used to validate that signature.

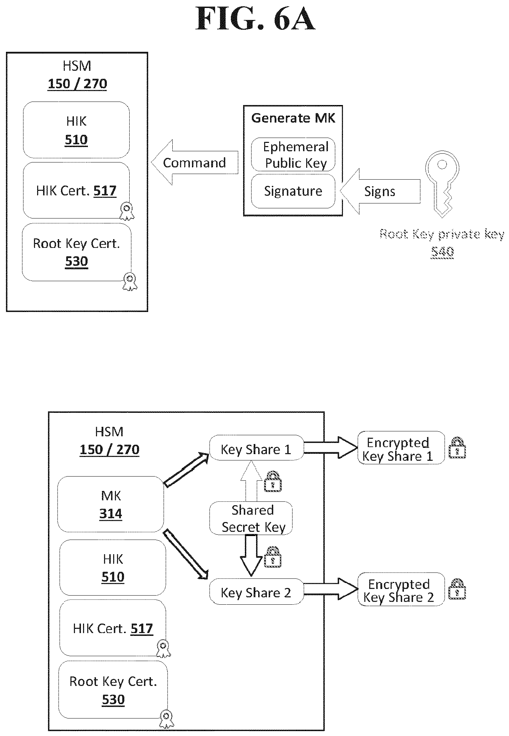

FIG. 6A shows an example process to generate a master key according to embodiments disclosed herein, such as master key 314 in FIGS. 3A-3B. First, an ephemeral key to be used to generate a session key to encrypt key shares is generated, such as an elliptic curve Diffie-Hellman (ECC-DH) ephemeral key. The root key 540 may be used to sign a message payload that is sent to the HSM 150/270. The HSM 150/270 then may verify the message using the latest RK public key. The HSM 150/270 then may generate the MK 314 and split the MK 314 into two key shares, each of which may be separately encrypted using the same derived ECC-DH ephemeral session key but with a different initialization vector. The encrypted shares then may be exported from the HSM and stored in separate secure systems and/or locations. The master key may be used in association with any command sent to the HSM, such as a request to generate an indicia or other operations disclosed herein.

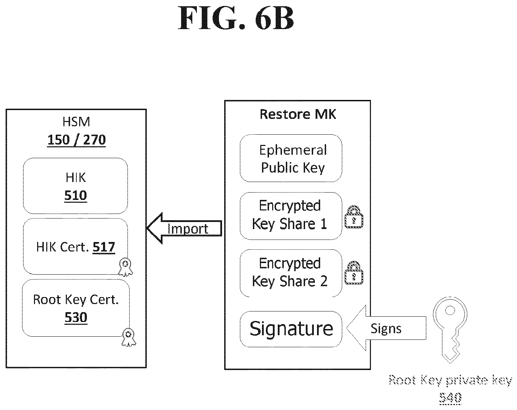

FIG. 6B shows a corresponding example of restoring a master key from the encrypted key shares generated in FIG. 6A, for example to provide the master key to an HSM that has not yet received it or to provision a new physical HSM device in the system. The host, such as an HSM agent or VCM as previously disclosed, generates an ephemeral key as previously disclosed, such as via the ECC-DH algorithm, which is then used along with the HIK certificate to generate a session key. Each key custodian retrieves their key share from the secure storage location, and the key share is encrypted using the session key. The message, including the two encrypted key shares, is signed using the root key (RK) private key. The HSM then verifies the message using the RK public key, and decrypts the shares using the session key. The key shares then may be re-combined, such as by XORing the two shares, to retrieve the master key.

Notably, the processes described with respect to FIGS. 6A-6B and throughout the present disclosure may be used to dynamically move HSMs in the system from one version of the master key to another, for example when the master key is re-keyed on a periodic basis. The new master key essentially is staged in each HSM in the system, during which time the HSMs can still use the prior version of the master key to decrypt VPSD state data and thereby process VPSD indicia requests while the master key transition is in progress. As previously noted, the use of a master key as disclosed herein allows each HSM to process requests for any VPSD in the system, regardless of the physical location of the HSM and/or the requesting entity. The master key re-keying process similarly allows any HSM to operate in this fashion even while the process is underway, thereby further providing greatly enhanced scalability and reliability in contrast to conventional indicia-generating systems.

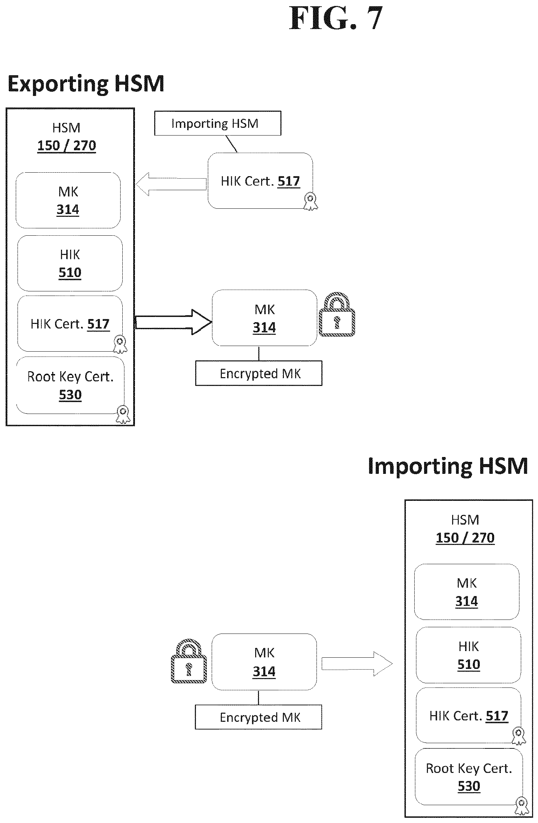

FIG. 7 shows an example of importing and exporting master keys between HSMs according to embodiments disclosed herein. The originating and destination HIK certificates 517 are used to create a shared session key, for example using a ECC-DH algorithm. The HIK certificate 517 of the importing HSM is sent to an HSM that has created a MK, for example as disclosed with respect to FIG. 6. The importing HIK certificate is verified using the MK public key and the MK is encrypted using the shared session key and signed by the exporting HIK private key. The importing HSM verifies the message signature using the exporting HSM's HIK public key, and the exporting HIK certificate is verified using the MK public key. The MK then may be decrypted using the shared session key.

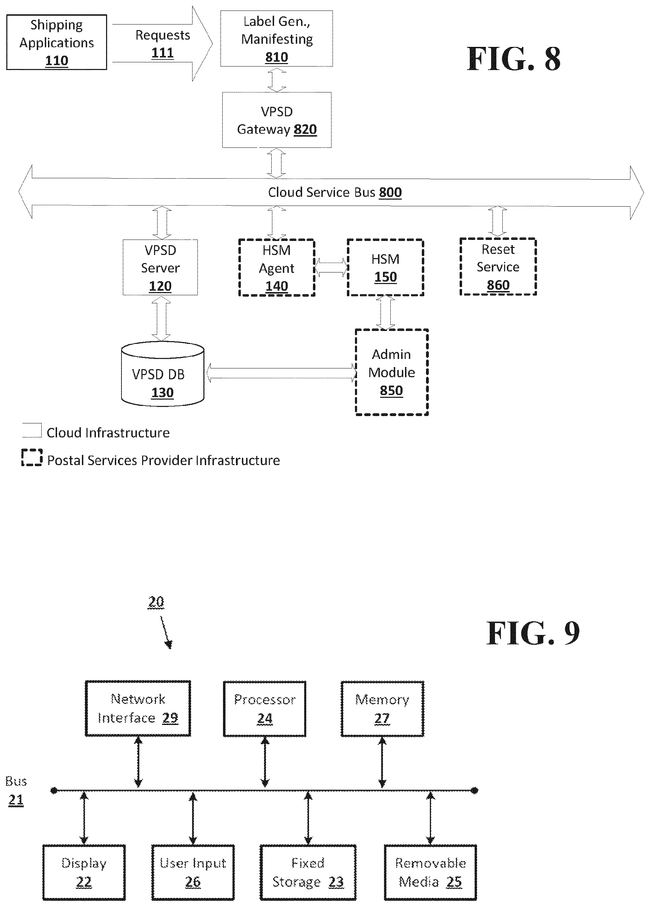

FIG. 8 shows an architecture diagram for an example cloud-based system as disclosed herein, which uses a cloud interface to backend HSMs. As previously disclosed with respect to FIGS. 1-2, the HSMs may be operated by the cloud service, or the cloud service may provide an interface to HSMs managed by a postal services provider as shown in FIG. 8. The cloud service bus 800 provides a general interface to cloud service components and postal services provider components, and facilitates communication between the different components. Shipping applications or other end user-facing components 110 may receive shipping information from end users and send requests 111 to the system as previously disclosed with respect to FIGS. 1-2. A label generation and manifesting component 810 may provide overall label creation functions and interface with a VPSD gateway 810 for purposes of accessing the VPSDs. The cloud service also may provide other services common to such services, both to end users and the postal services provider, such as log viewing, a management dashboard, reporting services, and the like.

A VPSD server 120 may provide access to the VPSD database 130, which stores VPSD records as previously disclosed herein. The HSM agent 140 (or, in some embodiments, a VCM 260) provides access to the appropriate HSM(s) 150 based upon the requests 111 and the VPSD records stored in the VPSD database 130. An administration module 850 may provide other backend services, such as a management user interface, HSM re-key functionality, and the like. The services provider infrastructure may include other components common to such systems, such as a reset service 860 for adding funds to VPSDs or other PSD management and administrative functions, such as managing "short pay" events in which indicia are requested and/or generated for more than the available amount in the descending register of the associated VPSD.

Embodiments disclosed herein may be implemented on a range of computer systems. FIG. 9 shows an example of a general- or specific-purpose computing device 20 suitable for implementing embodiments disclosed herein. For example, the device 20 may be used to implement a cloud-based system, VPSD server, VPSD database, HSM agent, or the like. HSMs may be implemented on a similar, special-purpose device having relatively limited communication modules and special-purpose cryptographic processors, as is known in the art. The device 20 may be, for example, a desktop or server computer or the like, or an embedded computing system, such as a system embedded in a cloud service that is accessible by end users or end user-facing applications through an API or similar interface. The device 20 may include a bus 21 which interconnects components of the computer 20, such as a central processor 24, a memory 27 such as Random Access Memory (RAM) and/or Read Only Memory (ROM), flash RAM, or the like, a user display 22 such as a display screen, a user input interface 26, which may include one or more controllers and associated user input devices such as a touch screen, code entry keypad as disclosed herein, or the like, a fixed storage 23 such as a hard drive, flash storage, and the like. The device may include a removable media component 25 operative to control a flash media reader or the like, for example to allow for local administrators to load updated software into a computing device as disclosed herein. The device may include a network interface 29 operable to communicate with remote devices via a suitable network connection such as via the Internet. The network interface 29 may provide such connection using any suitable technique and protocol as will be readily understood by one of skill in the art, including digital cellular telephone, Wi-Fi, Bluetooth(R), near-field, and the like. For example, the network interface 29 may allow the device to communicate with other computers via one or more local, wide-area, or other communication networks, as described herein.

The bus 21 allows data communication between the central processor 24 and one or more memory components 25, 27, which may include RAM, ROM, and other memory, as previously noted. Applications resident with the computer 20 are generally stored on and accessed via a computer readable storage medium.

More generally, embodiments disclosed herein may include or be embodied in the form of computer-implemented processes and apparatuses for practicing those processes. Embodiments also may be embodied in the form of a computer program product having computer program code containing instructions embodied in non-transitory and/or tangible media, such as hard drives, solid state drives, or any other machine readable storage medium, such that when the computer program code is executed by a computer processor, the processor becomes an apparatus for practicing the embodiments. When implemented on a general-purpose microprocessor, the computer program code may configure the microprocessor to become a special-purpose device, such as by creation of specific logic circuits as specified by the instructions.

Embodiments may be implemented using hardware that may include a processor, such as a general-purpose microprocessor and/or an Application Specific Integrated Circuit (ASIC) that embodies all or part of the techniques according to embodiments of the disclosed subject matter in hardware and/or firmware. The processor may be coupled to memory, such as RAM, ROM, flash memory, a hard disk or any other device capable of storing electronic information. The memory may store instructions adapted to be executed by the processor to perform the techniques according to embodiments of the disclosed subject matter.

The foregoing description, for purpose of explanation, has been described with reference to specific embodiments. However, the descriptions provided herein are not intended to be exhaustive or to limit embodiments of the disclosed subject matter to the precise forms disclosed. The illustrative embodiments were chosen and described in order to explain the principles of embodiments of the disclosed subject matter and their practical applications, to thereby enable others skilled in the art to utilize those embodiments as well as various embodiments with various modifications as may be suited to the particular use contemplated.

## Claims

1. A method of providing a postage indicia, the method comprising:
receiving a first request (111) to generate an indicia;
obtaining a first virtual postal security device (VPSD) record from a VPSD database (130), the VPSD database storing a plurality of records for a plurality of VPSDs;
extracting register information from the first VPSD record;
updating register values in the VPSD record (311) based on the first request (111);
processing, via a hardware security module (HSM - 150), the VPSD record (311) and the first request (111) to generate the indicia, by:
cryptographically signing a generated indicia (317) that includes a fund amount corresponding to updates made to the register values;
storing the updated register values in the VPSD record (311) in the VPSD database (130); and providing the generated indicia (317).

2. The method of claim 1, wherein the HSM is a cloud-based HSM (270).

3. The method of claim 2, wherein the step of updating the register values in the VPSD record (311) is performed outside of the HSM, and the HSM (150) signs the updated VPSD record.

4. The method of claim 1, wherein the step of updating the register values in the VPSD record (311) is performed by the HSM (150).

5. The method of claim 1, wherein the VPSD record (311) comprises:
a unique identifier for the VPSD;
an ascending register value;
a descending register value; and
an encrypted PSD state verification key, the PSD state verification key (316) used to verify the ascending register value and the descending register value.

6. The method of claim 5, wherein the PSD state verification key (316) is stored in a separate data item from the ascending register value and the descending register value.

7. The method of claim 5, wherein the ascending register value and/or the descending register value are stored as plain text in the VPSD record (311).

8. The method of claim 5, the VPSD record (311) further comprising:
An encrypted indicia key, the indicia key (315) used by the HSM (150) to sign the generated indicia (317).

9. The method of claim 8, further comprising:
decrypting the encrypted PSD state verification key; and
verifying contents of the VPSD record (311) using the PSD state verification key (316) after it is decrypted.

10. The method of claim 9, wherein the step of decrypting the encrypted PSD state verification key is performed using a master key (314) that is different than the PSD state verification key (316).

11. The method of claim 10, wherein the master key (314) is used by a plurality of HSMs to process indicia requests associated with a plurality of VPSD records, wherein any HSM (150) in the plurality of HSMs can process request associated with any of the plurality of VPSD records.

12. The method of claim 11, further comprising:
receiving, by the HSM (150), an indication of a replacement master key resulting from a re-keying of the master key (314);
if the replacement master key is not available at the plurality of HSMs, decrypting the encrypted PSD state verification key using the master key (314) or, if the replacement master key is available at the plurality of HSMs, decrypting the encrypted PSD state verification key using the replacement master key (316).

13. The method of claim 1, wherein the HSM (150) is selected from among a plurality of HSMs or is selected based upon a processing load of the HSM and/or other HSMs in the plurality of HSM.

14. A system comprising:
a virtual postal security device (VPSD) database (130) storing records indicating the state of a plurality of virtual postal security devices (VPSDs);
a processor (24) configured to:
receive a first request (111) to generate an indicia;
obtain a first VPSD record from the VPSD database (130);
extract register information from the first VPSD record; and
update register values in the VPSD record (311) based on the first request (111); and a plurality of hardware security module devices (HSMs) configured to process requests for indicia by:
cryptographically signing a generated indicia (317) that includes a fund amount corresponding to updates made to the register values;
the processor (24) and VPSD database (130) further configured to store the updated register values and a cryptographic signature generated by one of the plurality of HSMs in the VPSD record (311) in the VPSD database (130) and to provide the generated indicia (317) to a requestor.

15. A non-transitory computer-readable medium storing a plurality of instructions which, when executed by a computing system (20), cause the computing system to:
receive a first request (111) to generate an indicia;
obtain a first virtual postal security device (VPSD) record from a VPSD database (130), the VPSD database storing a plurality of records for a plurality of VPSDs;
extract register information from the first VPSD record;
update register values in the VPSD record (311) based on the first request (111);
process , via a hardware security module (HSM - 150), the VPSD record (311) and the first request (111) to generate the indicia, by:
cryptographically signing a generated indicia (317) that includes a fund amount corresponding to updates made to the register values;
store the updated register values in the VPSD record (311) in the VPSD database (130); and provide the generated indicia (317).
